# EUROPÄISCHE PATENTSCHRIFT

(11) **EP 3 708 505 B1**
(45) Veröffentlichungstag und Bekanntmachung des Hinweises auf die Patenterteilung: **18.05.2022**
(21) Anmeldenummer: 20156112.3
(22) Anmeldetag: 07.02.2020
(51) Int. Cl.: B65B 9/04, B65B 59/04

(54) **UNTERWERKZEUG FÜR EINE SKIN-VERPACKUNG**
LOWER TOOL FOR SKIN PACKAGING
OUTIL INFÉRIEUR POUR UN EMBALLAGE TRANSPARENT

(30) Priorität: 08.02.2019 DE 102019103196
(43) Veröffentlichungstag der Anmeldung: 16.09.2020
(73) Patentinhaber: Buergofol GmbH, 93354 Siegenburg (DE)
(72) Erfinder: Christian, Huber, 94369 Rain (DE)
(74) Vertreter: Herrmann, Uwe

(56) Entgegenhaltungen:
- EP-A1- 1 967 465
- EP-A1- 2 692 646
- EP-A1- 2 860 119
- WO-A1-2018/024382

## Beschreibung

### Technisches Gebiet

Die vorliegende Erfindung betrifft ein Unterwerkzeug für eine Siegelstation oder eine Formstation einer Verpackungsmaschine, mittels dessen eine Schalenverschließmaschine oder eine Tiefziehverpackungsmaschine zur Fertigung von Skin-Verpackungen mit flacher Grundplatte umgerüstet bzw. angepasst werden kann. Weiterhin betrifft die vorliegende Erfindung eine Verpackungsmaschine sowie ein Verfahren zur Fertigung einer Verpackung und / oder zum Betreiben einer V erpackungsm aschine.

### Hintergrund der Erfindung

Verpackungen aus Kunststoff sind aus der modernen Welt kaum noch wegzudenken. Seit den 1950er-Jahren haben sich Kunststoffprodukte und insbesondere Kunststoffverpackungen am Markt bei den Verbrauchern durchgesetzt. Ein Hauptanwendungsgebiet von Kunststoffverpackungen ist hierbei die Verpackung von Lebensmitteln.

Heutzutage sind Schätzungen zufolge sogar 35% des weltweiten Kunststoff- bzw. Plastik-Verbrauchs alleine auf Verpackungen, beispielsweise auf Lebensmittelverpackungen, zurückzuführen (Plastikmüll Statistik 2016). Das entspricht rund 8% der weltweiten Ölproduktion, die ausschließlich zur Herstellung von Kunststoff- bzw. Plastik-Verpackungen verbraucht wird. 2050 könnte dieser Wert schon bei 20% liegen.

Da Verpackungen meist als Einwegartikel vorgesehen sind und Kunststoffe biologisch nur sehr langsam abbaubar sind, hat die Popularität von KunststoffVerpackungen weitreichende ökologische Konsequenzen.

Jährlich verenden etwa 1.000.000 Seevögel und 100.000 Meeressäuger durch den Kontakt mit Plastikmüll, beispielsweise von Verpackungen etc. (Zudem gibt es Schätzungen zufolge in weiten Teilen des Meeres mittlerweile 6-mal mehr Plastik als Plankton.

Um derartige ökologische Probleme einzudämmen und den Umweltschutz zu stärken, wurde in Europa die Verpackungsverordnung erlassen, welche in Deutschland durch das am 1. Januar 2019 in Kraft getretene neue Verpackungsgesetz (VerpackG) abgelöst wurde.

Sinn und Zweck dieses Verpackungsgesetzes besteht darin, Plastikmüll zu reduzieren, die Wiederverwertung (Recycling) von Kunststoffen zu stärken und umweltfreundlichere Verpackungen zu fördern. Beispielsweise sollen Kunststoffverpackungen durch umweltfreundlichere Alternativen wie biologisch abbaubare Verpackungen aus Karton oder Papier ersetzt werden.

In der Praxis ist eine derartige Umstellung von Kunststoffverpackungen auf umweltfreundlichere Verpackungen, bei denen zumindest ein Teil des Kunststoffes durch Karton oder Papier ersetzt ist, jedoch insbesondere bei der Herstellung von Verpackungen umständlich und kostenintensiv und somit problembehaftet.

In den allermeisten Fällen müssen zur Fertigung eines neuen Verpackungstyps auch neue Verpackungsmaschinen angeschafft werden, da herkömmliche Verpackungsmaschinen jeweils ausschließlich zur Fertigung eines bestimmten Verpackungstyps geeignet bzw. ausgelegt sind.

Da eine neue einzige neue Verpackungsmaschine meist mehrere hunderttausende Euro kostet, ist die Umstellung auf umweltfreundlichere Verpackungstypen für viele Hersteller von Verpackungen problematisch, was ein großes Hindernis für die im neuen Verpackungsgesetz festgeschrieben Umweltschutzbestrebungen darstellt.

An dieser Stelle möchte die vorliegende Erfindung ansetzen, um die Umstellung auf umweltfreundlichere Verpackungstypen auf einfache und wirtschaftliche Weise zu ermöglichen und somit einen Beitrag zur praktischen Umsetzung des Verpackungsgesetzes und zum Umweltschutz zu leisten.

### Stand der Technik

Aus dem Stand der Technik sind Verpackungsmaschinen bekannt, welche jeweils zur Fertigung eines bestimmten Verpackungstyps geeignet bzw. ausgelegt sind.

Die WO 2018/024382 A1 offenbart eine Vorrichtung und ein Verfahren zum Verpacken eines Produkts, das auf einem Träger eines kontinuierlichen Trägers angeordnet ist, unter Verwendung einer Verpackungsbaugruppe, die so konfiguriert ist, dass sie einen Folienabschnitt einer Kunststofffolie fest an dem Träger oder dem Trägerabschnitt befestigt. Beispielsweise sind herkömmliche Schalenverschließmaschinen oder Tiefziehverpackungsmaschinen ausschließlich dazu ausgelegt, Verpackungen mit jeweils einem schalenförmigen Träger, in welchem ein zu verpackendes Produkt liegt, zu fertigen. Herkömmlicherweise sind solche schalenförmigen Träger meist Kunststoffschalen, in welche ein Produkt wie beispielsweise Fleisch oder Wurst gelegt wird, bevor die Kunststoffschalen jeweils mit einer transparenten Folie verschlossen bzw. versiegelt werden.

Unter Schalenverschließmaschinen sind hierbei Verpackungsmaschinen zu verstehen, welche vorgefertigte Kunststoffschalen als schalenförmige Träger verarbeiten und diese nach dem Befüllen der Kunststoffschalen mit einem zu verpackenden Produkt durch Versiegeln der befüllten Kunststoffschalen in einer Siegelstation der Verpackungsmaschine verschließen. Hierbei kann es sich um Skin-Verpackungen handeln, bei denen die eingesetzte skin-fähige Siegelfolie das zu verpackende Produkt und den Träger wie eine zweite Haut ("Skin") umschließt.

Bei Tiefziehverpackungsmaschinen werden die als schalenförmige Träger verwendeten Kunststoffschalen meist in der Verpackungsmaschine selbst durch Tiefziehen einer Kunststoffplatte bzw. einer stärkeren Kunststofffolie in einer Formstation der Verpackungsmaschine geformt, bevor die Kunststoffschalen jeweils mit dem zu verpackenden Produkt befüllt und in einer Siegelstation der Verpackungsmaschine verschlossen bzw. versiegelt werden.

Weiterhin sind Verpackungsmaschinen bekannt, welche ausschließlich dazu ausgelegt sind, Verpackungen mit jeweils einem flachen Träger, wie beispielsweiseeiner flachen Grundplatte bzw. einem Tablett aus Karton, auf welchem ein zu verpackendes Produkt aufliegt, zu fertigen.

Derartige flache Träger bzw. Trägermaterialien kommen insbesondere zur Präsentation hochwertiger Produkte, wie beispielsweise Lachs, zum Einsatz.

Nach dem Auflegen eines zu verpackenden Produkts auf den flachen Träger bzw. das Trägermaterial wird die Verpackung meist mit einer vorzugsweise Skin-fähigen transparenten Folie verschlossen bzw. versiegelt. Eine derartige Verpackung wird auch als Skin-Verpackung bezeichnet.

Unter einer Skin-fähigen Folie ist hierbei eine Folie zu verstehen, welche nach dem Aufbringen im erwärmten Zustand auf das zu verpackende Produkt und das Trägermaterial diese umgibt und dabei wie eine zweite Haut ("skin") an dem verpackten Produkt und dem Trägermaterial anliegt.

Sollen sowohl Verpackungen mit schalenförmigem Träger (beispielsweise Kunststoffschalen) als auch Verpackungen mit flachem Träger (beispielsweise Tabletts) hergestellt werden, so sind hierfür herkömmlicherweise mehrere separate Verpackungsmaschinen notwendig, die jeweils ausschließlich entweder schalenförmige Träger, z.B. aus Kunststoff, oder flache Träger, z.B. aus Karton, verarbeiten bzw. verarbeiten können.

Dies schränkt die Flexibilität in der Produktion von Verpackungen stark ein und führt zu erheblichen Kosten bei der Umstellung des Verpackungstyps, welcher hergestellt werden soll.

Durch die Anfangshürde der Anschaffung neuer Verpackungsmaschinen werden Bestrebungen des Umstellens auf umweltfreundlichere Verpackungstypen, wie beispielsweise eine Umstellung von vollständig aus Kunststoff bestehenden konventionellen Schalenverpackungen auf Skin-Verpackungen mit einer flachen Grundplatte aus umweltfreundlicherem Karton, erschwert oder gleich im Keim erstickt.

### Kurzbeschreibung der Erfindung

Der vorliegenden Erfindung liegt die Aufgabe zugrunde, die Probleme des Stands der Technik abzumildern oder ganz zu beheben. Mit der vorliegenden Erfindung soll eine Umstellung auf umweltfreundlichere Verpackungen unterstützt und vereinfacht werden.

Diese Aufgabe wird gelöst durch ein Unterwerkzeug gemäß Anspruch 1, eine Verwendung gemäß Anspruch 6, ein Verfahren gemäß Anspruch 12 und eine Verpackungsmaschine gemäß Anspruch 13. Weitere Aspekte der Erfindung betreffen ein Set aus mehreren erfindungsgemäßen Unterwerkzeugen sowie die Verwendung eines erfindungsgemäßen Unterwerkzeugs zur Umrüstung / Nachrüstung einer Verpackungsmaschine.

Vorteilhafte Weiterbildungen der Erfindung sind Gegenstand der Unterunteransprüche.

Der Kerngedanke der vorliegenden Erfindung besteht darin, Verpackungsmaschinen zur Fertigung von Verpackungen mit schalenförmigem Träger (beispielsweise Kunststoffschalen) derart umzurüsten bzw. anzupassen, dass diese auch Verpackungen mit flachem Träger (beispielsweise Tabletts) fertigen können.

Hierfür ist erfindungsgemäß ein bestimmtes Unterwerkzeug vorgesehen, welches beispielsweise in einer Schalenverschließmaschine oder einer Tiefziehmaschine auf einfache Weise montiert werden kann, sodass die Schalenverschließmaschine oder die Tiefziehmaschine auch zur Fertigung von Verpackungen mit flachem Träger verwendet werden kann.

Hierdurch entfällt die Notwendigkeit zur Umstellung der Produktion von umweltfreundlichen Verpackungen mit Tabletts aus Karton separate Verpackungsmaschinen anschaffen zu müssen, was die Herstellung umweltfreundlicher Verpackungen erleichtert und attraktiver macht.

Ein erfindungsgemäßes Unterwerkzeug wird vorzugsweise in eine Unterwerkzeugaufnahme einer Siegelstation oder einer Formstation einer Verpackungsmaschine, vorzugsweise einer Schalenverschließmaschine oder einer Tiefziehverpackungsmaschine, installiert bzw. in dieser montiert, wodurch die Verpackungsmaschine, vorzugsweise die Schalenverschließmaschine oder die Tiefziehverpackungsmaschine, zur Fertigung von Skin-Verpackungen mit flacher Grundplatte befähigt wird.

Das Unterwerkzeug fungiert in anderen Worten als Adapter bzw. Adapterstück, mittels dessen die Verpackungsmaschine zur Fertigung von Skin-Verpackungen mit flacher Grundplatte befähigt wird. Das Unterwerkzeug wird in der Verpackungsmaschine derart angeordnet, dass die Verpackungsmaschine durch das erfindungsgemäße Unterwerkzeug zur Fertigung von Skin-Verpackungen mit flacher Grundplatte befähigt wird.

Ohne ein derartiges Unterwerkzeug ist eine herkömmliche Schalenverschließmaschine (beispielsweise ein Traysealer) oder eine herkömmliche Tiefziehverpackungsmaschine (beispielsweise ein Thermoformer oder Tiefzieher) lediglich zur Verarbeitung muldenförmiger (Kunststoff-)Schalen, welche entweder vorgefertigt sind oder in der Verpackungsmaschine durch Tiefziehen erzeugt werden, fähig. Es können somit nur Verpackungen mit einem schalenförmigen bzw. muldenförmigen Träger, in dem ein zu verpackendes Produkt aufgenommen ist, gefertigt werden.

Die vorliegende Erfindung ermöglicht es, mit einer Schalenverschließmaschine oder einer Tiefziehverpackungsmaschine Skin-Verpackungen mit flacher Grundplatte zu fertigen. Die Trägermaterialien, wie beispielsweise der Karton, das Papier, die Kunststofffolie, oder auch andere gegebenenfalls als Trägermaterial in Einsatz kommende Materialien, werden vorzugsweise als Rollware zur Verfügung gestellt.

Verpackungen mit einem flachen Träger, beispielsweise einer flachen Grundplatte aus Kunststoff oder Karton, können mittels einer herkömmlichen Schalenverschließmaschine oder einer herkömmlichen Tiefziehverpackungsmaschine nicht gefertigt werden. Zur Fertigung derartiger Verpackungen muss daher herkömmlicherweise eine separate Verpackungsmaschine angeschafft werden, welche dazu ausgelegt ist, Verpackungen mit einem flachen Träger, beispielsweise einer flachen Grundplatte aus Kunststoff oder Karton, zu fertigen

Vorzugsweise ist das Unterwerkzeug in seiner Ausgestaltung, wie beispielsweise seinen Abmessungen, dazu ausgelegt, entfernbar oder nur zeitweise an oder in der der Verpackungsmaschine, insbesondere einer Unterwerkzeugaufnahme beispielsweise einer Siegelstation oder einer Formstation der Verpackungsmaschine angeordnet zu werden.

Das Unterwerkzeug kann einstückig oder mehrstückig und vorzugsweise aus Metall, wie beispielsweise Aluminium oder (Edel-) Stahl, einer Metalllegierung oder Kunststoff ausgebildet sein.

Vorzugsweise ist das Unterwerkzeug dazu ausgelegt, im in der Siegelstation oder der Formstation der Verpackungsmaschine angeordneten Zustand eine Schalenaufnahmemulde der Siegelstation oder eine Formmulde der Formstation funktionell und / oder physisch zu ersetzen oder die Schalenaufnahmemulde oder eine Formmulde der Formstation vollständig oder teilweise auszufüllen.

Sind mehrere Schalenaufnahmemulden oder Formmulden vorgesehen, so ersetzt bzw. füllt das Unterwerkzeug mindestens eine Schalenaufnahmemulde oder Formmulde. Es können aber auch mehrere oder alle Schalenaufnahmemulden oder Formmulden ersetzt bzw. ausgefüllt werden.

Insbesondere bei einer Verpackungsmaschine mit einer mehrteiligen Schalenaufnahme in der Siegelstation reicht es beispielsweise aus, wenn die mehreren Teilstücke der mehrteiligen Schalenaufnahme aus dem Verfahrensfluss der Fertigung entfernt werden, beispielsweise indem die mehreren Teilstücke der mehrteiligen Schalenaufnahme in Ruhepositionen bewegt werden, in denen sie nicht mehr am Fertigungsprozess teilhaben.

Die Schalenaufnahme bzw. Schalenaufnahmemulde bzw. die Formmulde muss also nicht zwingend aus der Verpackungsmaschine ausgebaut werden und dann ein erfindungsgemäßes Unterwerkzeug eingebaut werden, sondern es reicht aus, wenn das erfindungsgemäße Unterwerkzeug die Funktion oder Aufgabe der Schalenaufnahme bzw. Schalenaufnahmemulde bzw. Formmulde bei der Fertigung von Verpackungen übernimmt.

Die Funktion oder Aufgabe der Schalenaufnahme bzw. Schalenaufnahmemulde bzw. Formmulde bei der Fertigung von Verpackungen besteht meist darin, Trägermaterial (beispielsweise in Form einer Kunststoffschale), auf welches ein zu verpackendes Produkt aufgebracht wird, während der Fertigung der Verpackung zu tragen bzw. zu halten oder beispielsweise beim Tiefziehen die Form der erzeugten Kunststoffschale vorzugeben.

In anderen Worten muss das Unterwerkzeug die Schalenaufnahme bzw. Schalenaufnahmemulde der Siegelstation und / oder die Formmulde der Formstation nicht notwendigerweise physisch, sondern nur funktionell ersetzen.

Es hat sich als vorteilhaft erwiesen, wenn das Unterwerkzeug im Wesentlichen quaderförmig, bevorzugt mit mindestens einer, vorzugsweise vollständig, ebenen Oberfläche ausgestattet ist, welche im an oder in der Siegelstation oder der Formstation der Verpackungsmaschine angeordneten Zustand des Unterwerkzeugs vorzugsweise als Auflagefläche für eine flache Grundplatte bzw. ein Tablett einer Skin-Verpackung dient.

Gemäß einer vorteilhaften Ausführungsform ist das Unterwerkzeug als Einsatz ausgestaltet, welcher vorzugsweise in eine Unterwerkzeugaufnahme einer Verpackungsmaschine einsetzbar ist, um eine Schalenaufnahmemulde oder eine Formmulde einer Siegelstation oder Formstation der Verpackungsmaschine zu ersetzen.

Alternativ kann das Unterwerkzeug auch als Einsatz ausgestaltet sein, welcher direkt in eine Schalenaufnahmemulde oder eine Formmulde einer Siegelstation oder Formstation der Verpackungsmaschine einsetzbar ist, um vorzugsweise die Schalenaufnahmemulde oder die Formmulde einer Siegelstation oder Formstation der Verpackungsmaschine zu verschließen und / oder teilweise oder vollständig auszufüllen.

Das Unterwerkzeug kann die Form einer Platte haben, welche die Kontur der Schalenaufnahmemulde oder der Formmulde nachbildet und vorzugsweise im Wesentlichen spielfrei in diese eingesetzt werden kann, um die Schalenaufnahmemulde oder die Formmulde zu verschließen.

Erfindungsgemäß weist das Unterwerkzeug an einer der ebenen, vorzugsweise als Auflagefläche für eine flache Grundplatte einer Skin-Verpackung dienenden, Oberfläche entgegengesetzten Oberfläche eine Anzahl an Aussparungen bzw. Materialausnehmungen auf, welche vorzugsweise voneinander über Rippen oder Stege beabstandet sind.

Diese Ausgestaltung hat den Vorteil, dass das Unterwerkzeug leichter ausgebildet werden kann, wobei die Rippen oder Stege weiterhin eine ausreichende Stabilität bzw. Formstabilität des Unterwerkzeuges gewährleisten.

Weiterhin weist das Unterwerkzeug mindestens einen Durchgang auf, mittels dessen ein Vakuum vorzugsweise an einer Oberfläche des Unterwerkzeugs erzeugt werden kann. Vorzugsweise wird das Vakuum an der als Auflagefläche für eine flache Grundplatte einer Skin-Verpackung dienenden Oberfläche des Unterwerkzeuges erzeugt, weswegen der mindestens eine Durchgang vorzugsweise an der als Auflagefläche für eine flache Grundplatte einer Skin-Verpackung dienenden Oberfläche des Unterwerkzeuges geöffnet ist und die gesamte Dicke des Unterwerkzeugs durchdringt.

Vorteilhafterweise ist das Unterwerkzeug in die Verpackungsmaschine mit wenigen Handgriffen einsetzbar oder an/in dieser mit wenigen Handgriffen montierbar und wird vorzugsweise hauptsächlich durch die Schwerkraft in bzw. an der Verpackungsmaschine, vorzugsweise der Unterwerkzeugaufnahme einer Siegelstation oder Formstation der Verpackungsmaschine, gehalten.

In anderen Worten ist das Unterwerkzeug vorzugsweise dazu ausgelegt, im in oder an der Siegelstation oder der Formstation der Verpackungsmaschine angeordneten Zustand hauptsächlich durch die Schwerkraft in der Siegelstation oder der Formstation der Verpackungsmaschine gehalten zu werden.

Alternativ oder zusätzlich kann das Unterwerkzeug auch durch Form- oder Reibschluss in bzw. an der Verpackungsmaschine gehalten werden. Beispielsweise können auch Befestigungsmittel, beispielsweise in Form von Rastverbindungen, Steckverbindungen oder Hinterschneidungen vorgesehen sein.

Erfindungsgemäß wird ein Unterwerkzeug, wie es vorstehend beschrieben ist, zur Umrüstung / Nachrüstung einer Verpackungsmaschine, vorzugsweise einer Schalenverschließmaschine oder einer Tiefziehverpackungsmaschine, zur Fertigung eines anderen Verpackungstyps, insbesondere zur Fertigung eines Verpackungstyps mit flacher Grundplatte, besonders bevorzugt zur Fertigung von Skin-Verpackungen mit flacher Grundplatte, verwendet.

Gemäß der vorliegenden Erfindung ist es zudem vorgesehen, dass ein erfindungsgemäßes Unterwerkzeug auch zusammen mit einem zugehörigen Domwerkzeug zur Nachrüstung einer Siegelstation einer Verpackungsmaschine verwendet wird.

Herkömmlicherweise ist eine Schalenverschließmaschine (beispielsweise ein Traysealer) oder eine herkömmliche Tiefziehverpackungsmaschine (beispielsweise ein Thermoformer oder Tiefzieher) lediglich zur Verarbeitung muldenförmiger Schalen bzw. zur Fertigung von Verpackungen mit muldenförmigen Schalen einsetzbar.

Zur Fertigung von Verpackungen mit einem flachen Trägermaterial, auf welches ein zu verpackendes Produkt aufgelegt wird, beispielsweise zur Fertigung von Verpackungen mit einer flachen Grundplatte aus Kunststoff oder Karton, muss herkömmlicherweise eine separate Verpackungsmaschine angeschafft werden.

Die Verwendung eines erfindungsgemäßen Unterwerkzeuges ermöglicht es, mit einer herkömmlichen Schalenverschließmaschine (beispielsweise einem Traysealer) oder einer herkömmlichen Tiefziehverpackungsmaschine (beispielsweise einem Thermoformer oder Tiefzieher) auch Verpackungen mit einem flachen Trägermaterial, insbesondere Skin-Verpackungen mit einer flachen Grundplatte aus Karton oder Kunststoff, oder auch aus sonstigen Materialien, zu fertigen.

Die Verwendung mindestens eines erfindungsgemäßen Unterwerkzeuges ermöglicht somit eine Umrüstung einer Verpackungsmaschine, vorzugsweise einer Schalenverschließmaschine oder einer Tiefziehverpackungsmaschine, welche zur Fertigung eines ersten Verpackungstyps angepasst ist, zur Fertigung eines zweiten Verpackungstyps. Der zweite Verpackungstyp unterscheidet sich von dem ersten Verpackungstyp. Der erste Verpackungstyp kann beispielsweise eine Verpackung, insbesondere eine Skin-Verpackung, mit einem schalenförmigen / muldenförmigen Träger sein, in den ein zu verpackendes Produkt eingelegt wird. Der zweite Verpackungstyp kann beispielsweise eine Verpackung, insbesondere eine Skin-Verpackung, mit einem flachen Träger, beispielsweise einem Träger in Form eines Tabletts und / oder eine flachen Grundplatte, sein, auf den ein zu verpackendes Produkt aufgelegt wird.

In anderen Worten kann mittels des Unterwerkzeugs eine herkömmliche Schalenverschließmaschine oder eine herkömmliche Tiefziehverpackungsmaschine zur Fertigung von Verpackungen mit einem flachen Trägermaterial, insbesondere zur Fertigung von Skin-Verpackungen mit einer flachen Grundplatte aus Karton oder Kunststoff umgerüstet bzw. nachgerüstet werden.

Grundsätzlich kann mindestens ein erfindungsgemäßes Unterwerkzeug zum Einsatz kommen, welches vorzugsweise in der Siegelstation oder der Formstation einer Verpackungsmaschine zum Einsatz kommt. Es können aber auch mehrere erfindungsgemäße Unterwerkzeuge zum Einsatz kommen, beispielsweise können zwei Unterwerkzeuge verwendet werden, welche jeweils in der Siegelstation und der Formstation einer Verpackungsmaschine zum Einsatz kommen.

Vorzugsweise wird das mindestens eine Unterwerkzeug so verwendet, dass das Unterwerkzeug lösbar oder unlösbar an oder in der Verpackungsmaschine, vorzugsweise an oder in einer Siegelstation und / oder einer Formstation der Verpackungsmaschine angeordnet wird.

Weiterhin hat es sich als vorteilhaft erwiesen, wenn das Unterwerkzeug an oder in der Verpackungsmaschine, vorzugsweise an oder in der Siegelstation und / oder der Formstation der Verpackungsmaschine derart angeordnet wird, dass das Unterwerkzeug eine Schalenaufnahme oder Schalenaufnahmemulde der Siegelstation oder eine Formmulde der Formstation ersetzt, überbrückt oder ausfüllt.

Vorzugsweise wird an einer Oberfläche des Unterwerkzeugs, vorzugsweise an einer im an oder in der Siegelstation und / oder der Formstation der Verpackungsmaschine angeordneten Zustand des Unterwerkzeugs als Auflagefläche für eine flache Grundplatte einer Skin-Verpackung dienenden Oberfläche, ein Sog oder Vakuum erzeugt. Dies kann ein Verrutschen der flachen Grundplatte bzw. des Tabletts einer Skin-Verpackung zusätzlich reduzieren.

Weiterhin hat es sich als vorteilhaft erwiesen, dass das Unterwerkzeug derart an oder in der Verpackungsmaschine, vorzugsweise an oder in der Siegelstation und / oder der Formstation der Verpackungsmaschine angeordnet wird, dass das Unterwerkzeug hauptsächlich durch die Schwerkraft in der Siegelstation oder der Formstation der Verpackungsmaschine gehalten wird. Das Unterwerkzeug kann auch vollständig bzw. ausschließlich durch die Schwerkraft in der Siegelstation oder der Formstation der Verpackungsmaschine gehalten werden.

Alternativ kann bei einer entsprechenden Ausgestaltung des Unterwerkzeugs bzw. der Verpackungsmaschine das Unterwerkzeug auch derart an oder in der Verpackungsmaschine, vorzugsweise an oder in der Siegelstation und / oder der Formstation der Verpackungsmaschine angeordnet werden, dass das Unterwerkzeug mittels mindestens einem zusätzlichen Befestigungselement, wie beispielsweise einer Rastverbindung oder einer Steckverbindung, oder auch durch Reibschluss oder Formschluss oder durch eine Hinterschneidung an oder in der Verpackungsmaschine, vorzugsweise an oder in der Siegelstation und / oder der Formstation der Verpackungsmaschine gehalten werden.

Ein weiterer Aspekt der vorliegenden Erfindung betrifft ein Set aus mindestens zwei verschiedenen erfindungsgemäßen Unterwerkzeugen zur Umrüstung einer Verpackungsmaschine, vorzugsweise einer Schalenverschließmaschine oder einer Tiefziehverpackungsmaschine, welche zur Fertigung eines ersten Verpackungstyps ausgelegt ist, zur Fertigung mehrerer (zweiter, dritter etc.) verschiedener Verpackungstypen, welche sich von dem ersten Verpackungstyp und voneinander unterscheiden. Die Anzahl der von dem Set umfassten erfindungsgemäßen Unterwerkzeuge ist beliebig.

Der erste Verpackungstyp kann beispielsweise eine Verpackung, insbesondere eine Skin-Verpackung, mit einem schalenförmigen / muldenförmigen Träger sein, in den ein zu verpackendes Produkt eingelegt wird. Der für den ersten Verpackungstypen verwendete schalenförmige / muldenförmige Träger hat beispielsweise eine definierte Muldentiefe und / oder Muldenform. Der zweite Verpackungstyp kann beispielsweise eine Verpackung, insbesondere eine Skin-Verpackung, mit einem flachen Träger, beispielsweise einem Träger in Form eines Tabletts und / oder eine flachen Grundplatte, sein, auf den ein zu verpackendes Produkt aufgelegt wird. Der dritte Verpackungstyp kann sich von dem ersten Verpackungstypen nur in der Muldentiefe und / oder Muldenform des verwendeten schalenförmigen / muldenförmigen Trägers unterscheiden.

Beispielsweise können die Unterwerkzeuge einer erfindungsgemäßen Sets jeweils eine Mulde aufweisen, die anders als die Schalenaufnahmemulde der Siegelstation oder die Formmulde der Formstation der Verpackungsmaschine ausgestaltet ist. Das Set kann beispielsweise verschiedene Unterwerkzeuge oder Einsätze mit jeweils verschiedenen Muldentiefen und / oder Muldenformen aufweisen.

Zudem kann das Set mehrere verschiedene Unterwerkzeuge gemäß den in den Figuren gezeigten Ausführungsformen umfassen.

Das Set kann auch mehrere Unterwerkzeuge umfassen, von denen nur eine Anzahl an Unterwerkzeugen Durchgänge aufweisen, mittels denen an einer Oberfläche eines jeden Unterwerkzeuges, welche als Auflagefläche für ein Trägermaterial, beispielsweise für eine flache Grundplatte einer Skin-Verpackung dient, ein Vakuum erzeugt werden kann.

Durch das erzeugte Vakuum kann die Auflage des Trägermaterials an der Auflagefläche verbessert werden, da das Trägermaterial an die Auflagefläche angesaugt wird, wodurch ein Verrutschen des Trägermaterials verhindert wird.

Weiterhin betrifft die vorliegende Erfindung ein Verfahren zum Fertigen einer Verpackung mittels einer Verpackungsmaschine, vorzugsweise einer Schalenverschließmaschine oder einer Tiefziehverpackungsmaschine, und / oder zum Betreiben einer Verpackungsmaschine, vorzugsweise einer Schalenverschließmaschine oder einer Tiefziehverpackungsmaschine, bevorzugt zur Fertigung von Verpackungen, vorzugsweise von Skin-Verpackungen, mit flacher Grundfläche, mit dem Schritt: Vorzugsweise entfernbares, aber auch permanentes oder dauerhaftes, Anordnen / Verbauen / Montieren eines erfindungsgemäßen Unterwerkzeugs in der Verpackungsmaschine, vorzugsweise an oder in einer Siegelstation oder Formstation der Verpackungsmaschine.

Die vorliegende Erfindung umfasst somit sowohl ein Verfahren zur Herstellung einer Verpackung bzw. von Verpackungen mittels einer Verpackungsmaschine als auch ein Verfahren zum Betreiben einer Verpackungsmaschine.

Vorzugsweise wird das erfindungsgemäße Unterwerkzeug in einer Unterwerkzeugaufnahme der Verpackungsmaschine angeordnet. Die Verpackungsmaschine kann nur ein erfindungsgemäßes Unterwerkzeug oder auch mehrere erfindungsgemäße Unterwerkzeuge aufweisen. Zudem kann die Verpackungsmaschine auch nur eine Unterwerkzeugaufnahme oder auch mehrere Unterwerkzeugaufnahmen aufweisen, von denen vorzugsweise in mindestens einer Unterwerkzeugaufnahme ein erfindungsgemäßes Unterwerkzeug aufgenommen ist.

Ein weiterer Aspekt der Erfindung betrifft eine Verpackungsmaschine, vorzugsweise eine Schalenverschließmaschine oder eine Tiefziehverpackungsmaschine, welche mindestens ein erfindungsgemäßes Unterwerkzeug aufweist, wodurch die Verpackungsmaschine auch zur Fertigung von Verpackungen, vorzugsweise von Skin-Verpackungen, mit flacher Grundplatte eingesetzt werden kann.

Es hat sich als vorteilhaft erwiesen, wenn bei der Verpackungsmaschine das mindestens eine Unterwerkzeug an oder in der Verpackungsmaschine, vorzugsweise an oder in einer Siegelstation und / oder Formstation der Verpackungsmaschine fest / unlösbar oder entfernbar / lösbar angeordnet ist.

Das Unterwerkzeug kann also fest an / in der Verpackungsmaschine verbaut sein, um diese permanent bzw. dauerhaft umzurüsten oder auch nur nach Bedarf an / in der Verpackungsmaschine zeitweise angeordnet sein und daraufhin wieder aus bzw. von der Verpackungsmaschine entfernt werden.

Vorzugsweise ist das mindestens eine Unterwerkzeug an oder in der Verpackungsmaschine, vorzugsweise an oder in einer Siegelstation der Schalenverschließmaschine und / oder Formstation der Verpackungsmaschine, hauptsächlich durch Schwerkraft oder durch Schwerkraft und / oder Vakuum gehalten.

Wenn das Unterwerkzeug nur oder hauptsächlich durch Schwerkraft in oder an der Verpackungsmaschine gehalten wird, ist das Montieren des Unterwerkzeugs in oder an der Verpackungsmaschine besonders einfach, denn das Unterwerkzeug muss nur auf einen Stützabschnitt der Verpackungsmaschine gesetzt und vorzugsweise in eine entsprechende Aussparung eingesetzt werden und kann leicht wieder entfernt werden.

Weiterhin hat es sich als vorteilhaft erwiesen, wenn die Verpackungsmaschine im Bereich der Siegelstation ein höhenverstellbares Oberwerkzeug, welches vorzugsweise ein Domwerkzeug aufweist, und / oder eine höhenverstellbare Oberwerkzeugaufnahme und / oder ein höhenverstellbares Unterwerkzeug und / oder eine höhenverstellbare Unterwerkzeugaufnahme aufweist. Mittels des Oberwerkzeugs, insbesondere des darin enthaltenen Domwerkzeugs, wird vorzugsweise in der Siegelstation einer Verpackungsmaschine eine vorzugsweise skin-fähige Siegelfolie verformt, bevor die Siegelfolie zum Versiegeln einer Verpackung, insbesondere einer Skin-Verpackung eingesetzt wird. Eine derartige Ausgestaltung ermöglicht es, Produkte von unterschiedlicher Höhe / Größe mit der Verpackungsmaschine zu verpacken, da das Oberwerkzeug und / oder das Unterwerkzeug jeweils entsprechend der Höhe / Größe eines zu verpackenden Produkts positioniert werden können.

Ein weiterer Aspekt der Erfindung betrifft eine Verpackungsmaschine, bei der eine Schalenaufnahme der Verpackungsmaschine einstückig oder mehrstückig ausgebildet ist und das mindestens eine Unterwerkzeug die Schalenaufnahme ersetzt. Das Unterwerkzeug ersetzt die Schalenaufnahme bzw. die Aufgabe / Funktion der Schalenaufnahme bei der Fertigung.

Die Schalenaufnahme muss somit nicht zwingend aus der Verpackungsmaschine entfernt werden, sondern bei mehrstückigen Schalenaufnahmen können beispielsweise die einzelnen Teilstücke der mehrstückigen Schalenaufnahme in Ruhepositionen bewegt werden, in denen sie nicht mehr an dem Verfahrensfluss der Fertigung teilhaben.

Eine Bedruckung der Verpackung in / an der Verpackungsmaschine ist grundsätzlich weiterhin möglich, wenn mindestens ein erfindungsgemäßes Unterwerkzeug in oder an der Verpackungsmaschine, vorzugsweise in oder an einer Siegelstation oder einer Formstation der Verpackungsmaschine angeordnet ist.

### Beschreibung bevorzugter Ausführungsformen

Nachfolgend werden vorteilhafte Ausführungsformen der Erfindung unter Bezugnahme auf die zugehörigen Figuren beschrieben. Gleiche Bezugszeichnen bezeichnen hierbei gleiche oder ähnliche Bauteile.
Fig. 1 zeigt eine Schnittansicht einer Schalenaufnahme oder eine Formmulde einer Schalenverschließmaschine oder einer Tiefziehverpackungsmaschine;
Fig. 2 zeigt eine Schnittansicht eines beispielhaften Unterwerkzeugs (durch die fett gedruckte Linie wiedergegeben) gemäß einer ersten Ausführungsform;
Fig. 3 zeigt eine Schnittansicht eines beispielhaften Unterwerkzeugs (durch die fett gedruckte Linie wiedergegeben) gemäß einer zweiten Ausführungsform;
Fig. 4 zeigt eine Schnittansicht eines beispielhaften Unterwerkzeugs (durch die fett gedruckte Linie wiedergegeben) gemäß einer dritten Ausführungsform;
Fig. 5 zeigt eine Schnittansicht eines erfindungsgemäßen Unterwerkzeugs (durch die fett gedruckte Linie wiedergegeben) gemäß einer vierten Ausführungsform;
Fig. 6 zeigt eine Schnittansicht eines erfindungsgemäßen Unterwerkzeugs (durch die fett gedruckte Linie wiedergegeben) gemäß einer fünften Ausführungsform;
Fig. 7 verdeutlicht, wie eine Kunststoffschale in einer Schalenaufnahmemulde einer Siegelstation einer Schalenverschließmaschine aufgenommen ist oder wie eine Kunststofffolie in einer Formmulde einer Formstation einer Tiefziehverpackungsmaschine in eine schalenförmige Form gebracht wird;
Fig. 8 verdeutlicht, wie eine flache Grundplatte, z.B. ein Tablett einer Skin-Verpackung durch ein erfindungsgemäßes Unterwerkzeug getragen wird;
Fig. 9 zeigt eine herkömmliche Tiefziehverpackungsmaschine; und
Fig. 10 zeigt eine Tiefziehverpackungsmaschine mit einem erfindungsgemäßen Unterwerkzeug.

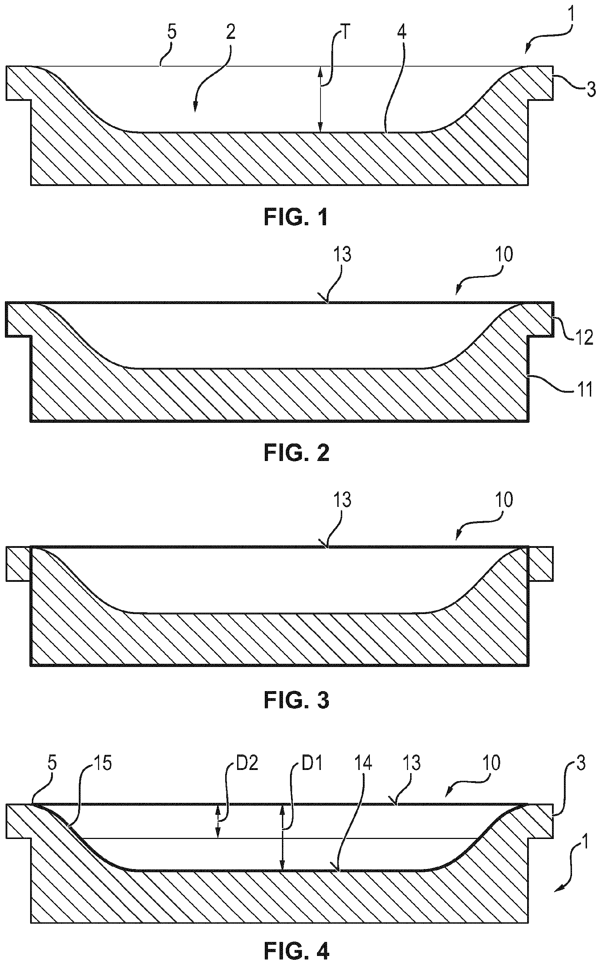

Fig. 1 zeigt schematisch ein Bauteil 1 mit einer Vertiefung bzw. Mulde 2, welches als Schalenaufnahme in einer Siegelstation einer Schalenverschließmaschine oder in einer Formstation einer Tiefziehverpackungsmaschine eingesetzt werden kann. Die Mulde 2 kann als Schalenaufnahmemulde oder als Formmulde dienen bzw. eingesetzt werden.

Das Bauteil 1 hat einen im Wesentlichen quaderförmigen Grundkörper mit einem umlaufenden Vorsprung / Kragen 3 an der Seite, zu der hin die Mulde 2 geöffnet ist. Je nach Anwendung dient der umlaufende Vorsprung / Kragen 3 dazu, das Bauteil gegen ein zu tiefes Einführen zu sichern, wenn das Bauteil 1 beispielsweise in eine Aussparung einer Aufnahme einer Verpackungsmaschine eingesetzt wird.

Die Mulde 2 hat eine gewisse Tiefe T, welche sich zwischen dem Muldengrund 4 und einer Kante 5, welche einen Rand der Mulde 2 bildet, erstreckt.

Fig. 2 zeigt ein Unterwerkzeug 10, welches in eine Verpackungsmaschine eingebaut werden kann, um dort ein wie das in Fig. 1 gezeigte Bauteil 1 ausgebildetes Bauteil mit einer Schalenaufnahme oder Formmulde zu ersetzen.

In Fig. 2 ist das Unterwerkzeug 10 mit einer fett gedruckten Linie wiedergegeben und das Bauteil 1, welches die Schalenaufnahme oder Formmulde repräsentiert, ist durch eine normal gedruckte Linie wiedergegeben. Das Bauteil 1 ist nur aus Gründen der klareren Darstellung in Figur 2 wiedergeben, damit deutlicher wiedergegeben wird, dass das Unterwerkzeug 10 die Konturen des herkömmlichen Bauteils 1 teilweise oder vollständig nachbildet und somit das Bauteil 1 beispielsweise in der Unterwerkzeugaufnahme einer Verpackungsmaschine ersetzt. Das Unterwerkzeug 10 weist die in Fig. 2 durch die fett gedruckten Linie eingezeichneten Merkmale, nicht aber die in Fig. 2 nur durch eine normal gedruckte Linie wiedergegebenen Merkmale auf. Dies gilt auch für die weiteren Figuren 3-8.

Wie in Fig. 2 gezeigt, hat das Unterwerkzeug 10 einen im Wesentlichen quaderförmigen Grundkörper 11 mit einem teilweise oder vollständig umlaufenden Vorsprung / Kragen 12. Ähnlich wie der umlaufende Vorsprung / Kragen 3 dient der umlaufende Vorsprung / Kragen 12 dazu, das Unterwerkzeug 10 gegen ein zu tiefes Einführen zu sichern, wenn das Unterwerkzeug 10 beispielsweise in eine Aussparung einer Aufnahme einer Verpackungsmaschine eingesetzt wird.

Das Unterwerkzeug 10 weist eine ebene Oberfläche 13 auf, welche als Auflagefläche für flache Trägermaterialen (z.B. Tabletts oder Platten aus Karton oder Papier) für Verpackungen dient. Die Oberfläche 13 ist vorzugsweise vollständig eben und weist keinerlei Aussparungen oder Mulden auf, welche dazu ausgelegt sind, schalenförmige oder muldenförmige Trägermaterialen für Verpackungen zu tragen oder zu halten.

Fig. 3 zeigt eine weitere Ausführungsform eines Unterwerkzeugs 10. Das Unterwerkzeug 10 hat in dieser Ausführungsform die Form eines Quaders bzw. hat im Wesentlichen die Form eines Quaders, weist jedoch keinen Vorsprung / Kragen 12 auf. Die Maße des Unterwerkzeugs sind so gewählt, dass das Unterwerkzeug in eine Unterwerkzeugaufnahme einer Verpackungsmaschine passt und in diese eingesetzt werden kann.

Das Unterwerkzeug 10 kann grundsätzlich massiv ausgestaltet sein oder auch eine Aussparung oder mehrere Aussparungen aufweisen, welche der Gewichtreduzierung des Unterwerkzeugs dienen. Eine derartige Aussparung oder derartige Aussparungen sind jedoch vorzugsweise nicht an der ebenen Oberfläche 13 vorgesehen oder dort nur so klein ausgebildet, dass eine möglichst gute Auflage des flachen Trägermaterials auf der Oberfläche 13 trotz der Aussparung oder Aussparungen nicht gefährdet ist.

Fig. 4 zeigt eine weitere Ausführungsform eines Unterwerkzeugs 14. Das Unterwerkzeug gemäß dieser Ausführungsform ersetzt das Bauteil 1, also die Schalenaufnahme bzw. Formmulde, lediglich funktionell, das Bauteil 1und daher die Schalenaufnahme bzw. Formmulde verbleiben jedoch in der umzurüstenden Verpackungsmaschine.

Gemäß dieser Ausführungsform ist das Unterwerkzeug 10 so ausgestaltet, dass es sich in die Mulde M, welche als Schalenaufnahmemulde einer Siegelstation oder als Formmulde einer Formstation einer Verpackungsmaschine fungiert, einpasst und diese vorzugsweise vollständig ausfüllt.

Die ebene Oberfläche 13 (Auflagefläche für flache Trägermaterialien) des Unterwerkzeugs 10 bildet somit, wenn das Unterwerkzeug 10 wie in Fig. 4 gezeigt in der Mulde 2 eingesetzt bzw. eingepasst ist, eine kontinuierliche bzw. durchgängige im Wesentlichen ebene Oberfläche mit der Kante 5, welche den Rand der Mulde 2 bildet. Die durch die Oberfläche 13 des Unterwerkzeugs 10 definierte Ebene wird somit durch die Kante 5 und eine an diese Kante anschließende Oberfläche des Vorsprungs / Kragens 3 fortgesetzt, sodass eine kontinuierliche Ebene gebildet wird.

Eine der Oberfläche 13 entgegengesetzte Oberfläche 14 bildet die Kontur des Muldengrunds 4 der Mulde 2 und der geschwungenen Muldenausläufe 15 nach und eine Dicke D1 des Unterwerkzeugs 10, welche sich zwischen den Oberflächen 13 und 14 erstreckt, entspricht vorzugsweise der Tiefe T der Mulde 2, in welche das Unterwerkzeug 10 einsetzbar bzw. eingesetzt ist. Hierbei bildet die Oberfläche 13 des Unterwerkzeugs 10 mit der Kante 5 und einer an diese Kante anschließenden Oberfläche des Vorsprungs / Kragens 3 eine kontinuierliche und vorzugsweise ebene Auflagefläche für Trägermaterialien.

Alternativ dazu kann das Unterwerkzeug auch lediglich eine Dicke D2 aufweisen. Die Dicke D2 des Unterwerkzeugs 10, welche sich zwischen den Oberflächen 13 und 14 erstreckt, kann grundsätzlich auch geringer als die Tiefe T der Mulde 2 sein, in welche das Unterwerkzeugs 10 eingesetzt wird. In diesem Fall hat das Unterwerkzeug 10 die Form eines Deckels, welcher in die Mulde 2 eingepasst ist und diese verschließt, sodass eine im Wesentlichen ebene oder vollständig ebene Fläche zwischen der Oberfläche 13 des Unterwerkzeugs 10 und der Kante 5 des Muldenrands der Mulde 2 gebildet wird. Zwischen der Oberfläche 14 und dem Muldengrund 4 befindet sich bei dieser Ausführung eine Lücke bzw. ein Spalt.

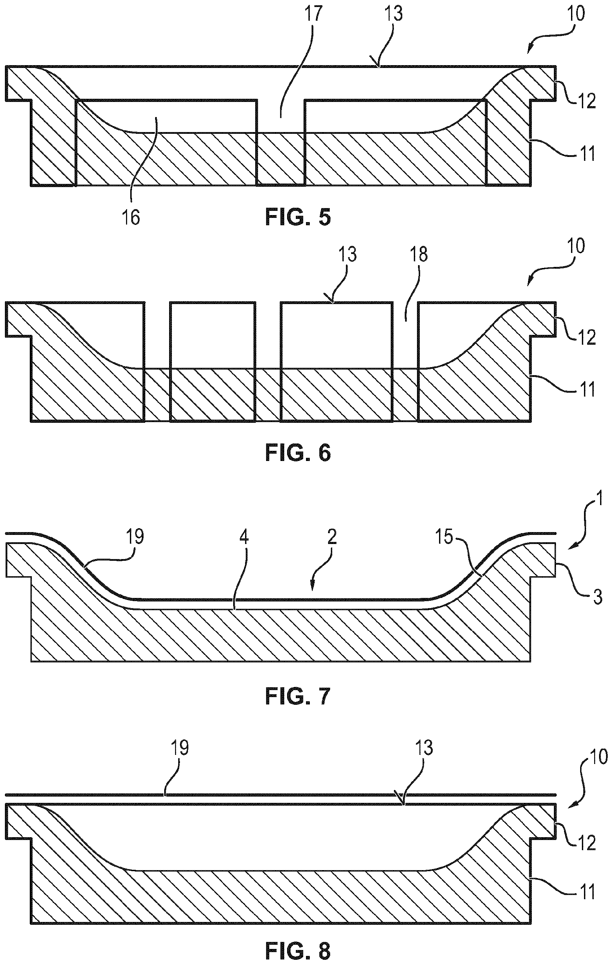

Wie in Fig. 5 gezeigt, kann das Unterwerkzeug 10 an einer der Oberfläche 13 entgegengesetzten Seite eine beliebige Anzahl an Aussparungen bzw. Materialausnehmungen 16 aufweisen, welche voneinander über Stege bzw. Rippen 17 getrennt oder beanstandet sind. Im Gegensatz zu einem massiv ausgebildeten Unterwerkzeug ist ein Unterwerkzeug mit derartigen Aussparungen bzw. Materialausnehmungen deutlich leichter.

Wie in Fig. 6 gezeigt, kann das Unterwerkzeug 10 weiterhin Durchgänge 18 aufweisen, welche vorzugsweise an der Oberfläche 13 geöffnet sind und sich vorzugsweise über bzw. durch die gesamte Dicke des Unterwerkzeugs erstrecken. Mittels den Durchgängen kann an der Oberfläche 13 ein Vakuum angelegt bzw. ein Sog erzeugt werden, mittels dessen ein auf der Oberfläche 13 aufliegendes Trägermaterial für eine Verpackung an der Oberfläche 13 gehalten und somit gegen ein Verrutschen gesichert wird.

Die Durchgänge 18 sind in Fig. 6 aus Gründen der besseren Darstellung sehr groß dargestellt, tatsächlich können die Durchgänge 18 im Durchmesser nur einen oder wenige Millimeter, nur einen Bruchteil eines Millimeters, oder auch nur wenige Mikrometer haben.

Die Durchgänge 18 können auf allen Seiten von dem Material des Unterwerkzeugs 10 umschlossen sein und somit lokal sehr begrenzte Ausnehmungen in dem Unterwerkzeug 10 oder dem Grundkörper 11 des Unterwerkzeugs 10 bilden.

Das Unterwerkzeug 10 kann einstückig ausgebildet sein. Alternativ kann das Unterwerkzeug 10 auch mehrstückig ausgebildet sein und vorzugsweise eine Anzahl an voneinander lösbaren Teilstücken aufweisen.

Fig. 7 zeigt, wie bei einer bekannten Schalenverschließmaschine oder Tiefziehverpackungsmaschine eine Kunststoffschale 19 in einer Schalenaufnahmemulde (Mulde 2 des Bauteils 1) einer Siegelstation einer Schalenverschließmaschine aufgenommen ist oder wie eine Kunststofffolie 19 in einer Formmulde (Mulde 2 des Bauteils 1) einer Formstation einer Tiefziehverpackungsmaschine in eine schalenförmige Form gebracht wird.

Das Bauteil 1 mit der Mulde 2 kann als Schalenaufnahme oder auch als Formmulde einer Verpackungsmaschine eingesetzt werden.

Wie in Fig. 7 gezeigt, folgt die Kontur der Kunststoffschale 19 bzw. Kunststofffolie 19 der Kontur der Mulde 2 bzw. der Kontur des Muldengrunds 4 und der Muldenausläufe 15.

Wird das Bauteil 1 in einer Siegelstation einer Schalenverschließmaschine eingesetzt, so wird pro zu fertigender Verpackung eine Kunststoffschale 19 in die Schalenaufnahmemulde (Mulde 2 des Bauteils 1) eingelegt.

Wird das Bauteil 1 in einer Formstation einer Tiefziehverpackungsmaschine eingesetzt, so wird pro zu fertigender Verpackung ein Abschnitt einer Kunststofffolie 19 in einer Formmulde (Mulde 2 des Bauteils 1) der Formstation der Tiefziehverpackungsmaschine durch das Anlegen von Vakuum und / oder das Aufbringen von Druckluft in eine die Kontur der Mulde 2 nachbildende schalenförmige Form gebracht.

Fig. 8 verdeutlicht, wie eine flache Grundplatte, z.B. ein Tablett einer Skin-Verpackung oder Kunststofffolie, welche dazu geeignet ist, als flache Grundplatte einer Verpackung zu dienen, durch die ebene Oberfläche 13 eines erfindungsgemäßen Unterwerkzeugs 10 getragen wird. Die ebene Oberfläche 13 ersetzt den Muldengrund 4 und die Muldenausläufe 15 als Anlagefläche der Kunststofffolie 19 bzw. einer Grundplatte / eines Tabletts aus Karton 19.

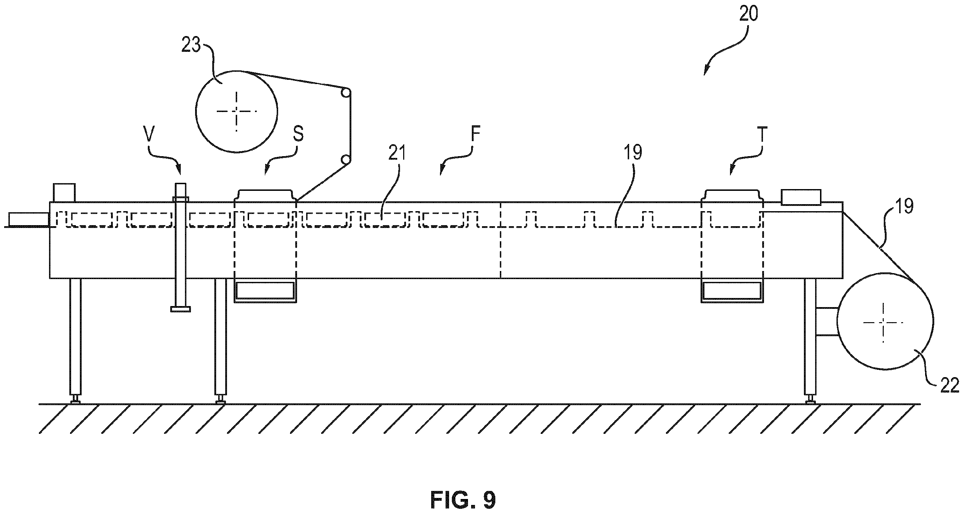

Fig. 9 zeigt eine herkömmliche Tiefziehverpackungsmaschine 20 mit einer Formstation, welche bei dieser Maschine eine Tiefziehstation T ist, bei der durch Tiefziehen in einer als Trägermaterial dienenden Kunststofffolie 19 Kunststoffschalen ausgeformt werden, einer Füllstation F, bei der die bei der Formstation ausgeformten Kunststoffschalen jeweils mit einem zu verpackenden Produkt 21 befüllt oder beschickt werden, und einer Siegelstation S, bei der die befüllten Kunststoffschalen 19 mit einer Kunststofffolie verschlossen bzw. versiegelt werden. Daraufhin werden die einzelnen Verpackungen mittels einer Vereinzelungsstation voneinander getrennt bzw. vereinzelt, indem die einzelnen versiegelten Verpackungen auseinander geschnitten werden.

Die Kunststofffolie 19, welche als Trägermaterial dient, wird der Verpackungsmaschine 20 von einer Rolle 22 zugeführt. Die zum Versiegeln eingesetzte Kunststofffolie wird der Verpackungsmaschine 20 von einer Rolle 23 zugeführt.

Die Verarbeitungsrichtung bzw. der Prozessfluss der Verpackungsherstellung erfolgt in der Darstellung in Fig. 9 von rechts nach links.

Die in Fig. 9 gezeigte, herkömmliche Tiefziehverpackungsmaschine 20 ist dazu ausgelegt, ausschließlich Verpackungen mit schalenförmigen bzw. muldenförmigen Trägern (Kunststoffschalen) zu fertigen und keine Verpackungen mit flacher Grundplatte (Tablett) zu fertigen.

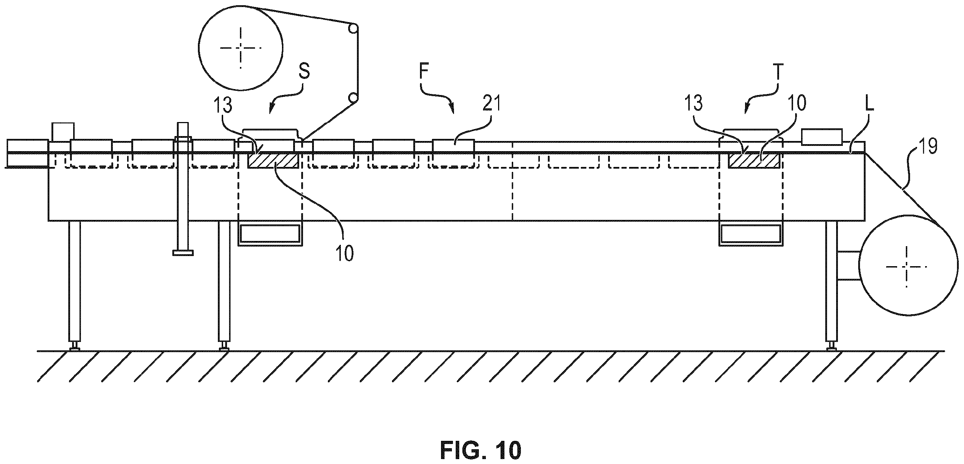

Fig. 10 zeigt die Tiefziehverpackungsmaschine aus Fig. 9, in der ein erfindungsgemäßes Unterwerkzeug 10 jeweils in der Formstation / Tiefziehstation T und der Siegelstation S installiert bzw. angeordnet ist.

Die Verarbeitungsrichtung bzw. der Prozessfluss der Verpackungsherstellung erfolgt auch in der Darstellung in Fig. 10 von rechts nach links.

Die Kunststofffolie 19 oder alternativ der Verpackungsmaschine als Trägermaterial zugeführter Karton bewegt sich im Verfahrensfluss in der Formstation / Tiefziehstation T und der Siegelstation S jeweils über eine ebene Oberfläche 13 eines Unterwerkzeugs 10 und wird auf dieser getragen, wie durch die fett gedruckte Linie L in Fig. 10 wiedergegeben. Das Unterwerkzeug 10 überbrückt die durch die Mulde 2 definierte Aussparung im Verfahrensfluss. Ist mindestens ein erfindungsgemäßes Unterwerkzeug in der Verpackungsmaschine, beispielsweise der Formstation, angeordnet, wird das Träger material nicht mehr verformt, sondern durchläuft die Verpackungsmaschine als flache Platte, wie durch die fett gedruckte Linie in Figur 10 wiedergegeben. Die Mulden sind in Fig. 10 lediglich aus Gründen der klareren Darstellung wiedergegeben, um auf den ersten Blick einen direkten Vergleich zwischen den Zuständen in einer Verpackungsmaschine ohne erfindungsgemäßes Unterwerkzeug (Fig. 9) und in einer Verpackungsmaschine mit mindestens einem erfindungsgemäßen Unterwerkzeug in einer einzigen Figur (Fig. 10) zu ermöglichen.

Die Kunststofffolie 19 bzw. der als Trägermaterial verwendete Karton behält durch die Anordnung des Unterwerkzeugs in der Tiefziehstation somit ihre / seine flache bzw. ebene Form und wird nicht durch die Verpackungsmaschine in der Tiefziehstation tiefgezogen.

Zudem trägt die Oberfläche 13 des Unterwerkzeugs die Kunststofffolie 19 bzw. den Karton, sodass auch eine weniger steife oder formstabile Kunststofffolie 19 bzw. Karton in der Verpackungsmaschine verarbeitet werden kann, ohne dass die Kunststofffolie 19 bzw. der Karton beim Durchlaufen der Tiefziehstation T abknickt bzw. sich verformt, wie dies der Fall wäre, wenn die Tiefziehstation T lediglich inaktiviert würde (durch Ausstellen der Druckluft bzw. des Vakuums etc.), ohne dass ein Unterwerkzeug 10 in der Tiefziehstation T angeordnet wird.

In einem Modus zur Fertigung von Verpackungen mit flacher Grundfläche, in dem das Unterwerkzeug 10 in der Tiefziehstation T der Verpackungsmaschine angeordnet ist, kann ein etwaiges in der Tiefziehstation T bei der Fertigung von Kunststoffschalen für Verpackungen mit schalenförmigem Träger eingesetztes Vakuum ausgeschaltet sein.

Das Unterwerkzeug 10 in der Tiefziehstation T und / oder der Siegelstation S kann allerdings auch Durchgänge 18 aufweisen, mittels denen ein Sog / Vakuum an der Oberfläche 13 des Unterwerkzeugs 10 erzeugt werden kann, mittels dessen ein Verrutschen der Kunststofffolie oder des Kartons auf der Oberfläche 13 verhindert werden kann. In diesem Fall bleibt das Vakuum in der Tiefziehstation T und / oder der Siegelstation S angeschaltet und wird mit den Durchgängen 18 verbunden, sodass die Kunststofffolie oder der Karton an die Oberfläche 13 angesaugt wird.

In der Füllstation F wird ein zu verpackendes Produkt 21 auf die als Trägermaterial dienende flache Grundplatte, beispielsweise die Kunststofffolie 19 oder den als Trägermaterial dienenden Karton, aufgelegt.

Wird Karton als Trägermaterial für eine Verpackung mit flacher Grundplatte verwendet, so können entweder vorgefertigte Tabletts zum Einsatz kommen, oder die Tabletts werden in der Verpackungsmaschine selbst erzeugt. Dies ist analog zur Verwendung vorgefertigter Kunststoffschalen bzw. in der Verpackungsmaschine selbst durch Tiefziehen erzeugter Kunststoffschalen bei Verpackungen mit schalenförmigem Träger.

Damit Produkte 21 verschiedener Größe bzw. Höhe mittels der Verpackungsmaschine verpackt werden können, ist das Unterwerkzeug 10 und / oder ein Oberwerkzeug der Siegelstation, welches vorzugsweise ein Domwerkzeug aufweist, in der Siegelstation vorzugsweise höhenverstellbar angeordnet.

## Patentansprüche

1. Unterwerkzeug (10) für eine Siegelstation (S) oder eine Formstation (T) einer Schalenverschließmaschine oder einer Tiefziehverpackungsmaschine (20), wobei das Unterwerkzeug (10) dazu ausgelegt ist, an oder in einer Unterwerkzeugaufnahme der Schalenverschließmaschine oder der Tiefziehverpackungsmaschine (20) angeordnet zu werden, wodurch die Schalenverschließmaschine oder die Tiefziehverpackungsmaschine (20) zur Fertigung von Verpackungen, vorzugsweise von Skin-Verpackungen, mit flacher Grundplatte befähigt wird, **dadurch gekennzeichnet, dass** das Unterwerkzeug (10) an einer der ebenen, vorzugsweise als Auflagefläche für eine flache Grundplatte einer Skin-Verpackung dienenden, Oberfläche (13) entgegengesetzten Oberfläche eine Anzahl an Aussparungen oder Materialausnehmungen (16) aufweist, welche voneinander über Rippen oder Stege (17) beabstandet sind und das Unterwerkzeug (10) mindestens einen Durchgang (18) aufweist, mittels dessen ein Vakuum oder Sog an einer Oberfläche des Unterwerkzeugs, vorzugsweise an einer als Auflagefläche für eine flache Grundplatte einer Skin-Verpackung dienenden Oberfläche (13), erzeugt werden kann.

2. Unterwerkzeug (10) nach Anspruch 1, **dadurch gekennzeichnet, dass** das Unterwerkzeug (10) dazu ausgelegt ist, lösbar oder unlösbar an oder in der Schalenverschließmaschine oder der Tiefziehverpackungsmaschine (20) angeordnet zu werden.

3. Unterwerkzeug (10) nach Anspruch 1 oder 2, **dadurch gekennzeichnet, dass** das Unterwerkzeug (10) einstückig oder mehrstückig ausgebildet ist.

4. Unterwerkzeug nach einem der vorhergehenden Ansprüche, **dadurch gekennzeichnet, dass** das Unterwerkzeug (10) im Wesentlichen quaderförmig, bevorzugt mit mindestens einer ebenen Oberfläche (13), welche vorzugsweise als Auflagefläche für eine flache Grundplatte einer Skin-Verpackung dient, ausgebildet ist.

5. Unterwerkzeug (10) nach einem der vorhergehenden Ansprüche, **dadurch gekennzeichnet, dass** das Unterwerkzeug (10) zumindest teilweise aus Metall, vorzugsweise aus Aluminium oder Edelstahl, oder aus Kunststoff gefertigt ist.

6. Verwendung mindestens eines Unterwerkzeuges (10) gemäß einem der vorhergehenden Ansprüche, welches dazu ausgelegt ist, an oder in einer Unterwerkzeugaufnahme der Schalenverschließmaschine oder der Tiefziehverpackungsmaschine (20) angeordnet zu werden, wodurch die Schalenverschließmaschine oder die Tiefziehverpackungsmaschine (20) zur Fertigung von Verpackungen, vorzugsweise von Skin-Verpackungen, mit flacher Grundplatte befähigt wird zur Umrüstung einer Schalenverschließmaschine oder einer Tiefziehverpackungsmaschine (20), welche zur Fertigung eines ersten Verpackungstyps angepasst ist, zur Fertigung eines zweiten Verpackungstyps, insbesondere zur Fertigung eines zweiten Verpackungstyps mit flacher Grundfläche, besonders bevorzugt zur Fertigung von Skin-Verpackungen mit flacher Grundfläche.

7. Verwendung nach Anspruch 6, **dadurch gekennzeichnet, dass** das Unterwerkzeug (10) lösbar oder unlösbar an oder in der der Schalenverschließmaschine oder der Tiefziehverpackungsmaschine (20), vorzugsweise an oder in einer Siegelstation (S) und / oder einer Formstation (T) der Schalenverschließmaschine oder der Tiefziehverpackungsmaschine (20) angeordnet wird.

8. Verwendung nach Anspruch 6, **dadurch gekennzeichnet, dass** das Unterwerkzeug (10) an oder in der Schalenverschließmaschine oder der Tiefziehverpackungsmaschine (20), vorzugsweise an oder in der Siegelstation (S) und / oder der Formstation (T) der Schalenverschließmaschine oder der Tiefziehverpackungsmaschine (20) derart angeordnet wird, dass das Unterwerkzeug (10) eine Schalenaufnahme oder Schalenaufnahmemulde (M) der Siegelstation (S) oder eine Formmulde (M) der Formstation (T) ersetzt, überbrückt oder ausfüllt.

9. Verwendung nach einem der Ansprüche 6 bis 8, **dadurch gekennzeichnet, dass** an einer Oberfläche des Unterwerkzeugs (10), vorzugsweise an einer als Auflagefläche für eine flache Grundplatte einer Skin-Verpackung dienenden Oberfläche (13), ein Sog oder Vakuum erzeugt wird.

10. Verwendung nach einem der Ansprüche 6 bis 9, **dadurch gekennzeichnet, dass** das Unterwerkzeug (10) derart an oder in der Schalenverschließmaschine oder der Tiefziehverpackungsmaschine (20), vorzugsweise an oder in der Siegelstation (S) und / oder der Formstation (T) der Verpackungsmaschine angeordnet wird, dass das Unterwerkzeug (10) hauptsächlich durch die Schwerkraft in der Siegelstation (S) oder der Formstation (T) der Schalenverschließmaschine oder der Tiefziehverpackungsmaschine (20) gehalten wird.

11. Set aus einer Mehrzahl verschiedener Unterwerkzeuge (10) jeweils nach einem der Ansprüche 1 bis 5 zur Umrüstung einer Schalenverschließmaschine oder einer Tiefziehverpackungsmaschine (10), zur Fertigung mehrerer verschiedener Verpackungstypen.

12. Verfahren zur Fertigung einer Verpackung mittels einer Schalenverschließmaschine oder einer Tiefziehverpackungsmaschine (20), bevorzugt zur Fertigung einer Skin-Verpackung vorzugsweise mit flacher Grundfläche, mit dem Schritt: Anordnen eines Unterwerkzeuges (10) gemäß einem der Ansprüche 1 bis 5, welches dazu ausgelegt ist, an oder in einer Unterwerkzeugaufnahme der Schalenverschließmaschine oder der Tiefziehverpackungsmaschine (20) angeordnet zu werden, wodurch die Schalenverschließmaschine oder die Tiefziehverpackungsmaschine (20) zur Fertigung von Verpackungen, vorzugsweise von Skin-Verpackungen, mit flacher Grundplatte befähigt wird, in der Schalenverschließmaschine oder der Tiefziehverpackungsmaschine (20), vorzugsweise an oder in einer Siegelstation (S) oder Formstation (T) der Schalenverschließmaschine oder der Tiefziehverpackungsmaschine (20).

13. Schalenverschließmaschine oder Tiefziehverpackungsmaschine (20), **dadurch gekennzeichnet, dass** die Schalenverschließmaschine oder Tiefziehverpackungsmaschine (20) mindestens ein Unterwerkzeug (10) gemäß einem der Ansprüche 1 bis 5, welches dazu ausgelegt ist, an oder in einer Unterwerkzeugaufnahme der Schalenverschließmaschine oder der Tiefziehverpackungsmaschine (20) angeordnet zu werden, wodurch die Schalenverschließmaschine oder die Tiefziehverpackungsmaschine (20) zur Fertigung von Verpackungen, vorzugsweise von Skin-Verpackungen, mit flacher Grundplatte befähigt wird, aufweist und zur Fertigung eines Verpackungstyps mit flacher Grundfläche, besonders bevorzugt zur Fertigung von Skin-Verpackungen mit flacher Grundfläche, einsetzbar ist.

14. Schalenverschließmaschine oder Tiefziehverpackungsmaschine (20) nach Anspruch 13, **dadurch gekennzeichnet, dass** das mindestens eine Unterwerkzeug (10) an oder in der Schalenverschließmaschine oder Tiefziehverpackungsmaschine (20), vorzugsweise an oder in einer Siegelstation (S) und / oder Formstation (T) der Schalenverschließmaschine oder Tiefziehverpackungsmaschine (20) lösbar oder unlösbar angeordnet ist.

15. Schalenverschließmaschine oder Tiefziehverpackungsmaschine (20) nach Anspruch 14, **dadurch gekennzeichnet, dass** das mindestens eine Unterwerkzeug (10) an oder in der Schalenverschließmaschine oder Tiefziehverpackungsmaschine (20), vorzugsweise an oder in einer Siegelstation (S) und / oder Formstation (T) der Schalenverschließmaschine oder Tiefziehverpackungsmaschine (20), hauptsächlich durch Schwerkraft oder durch Schwerkraft und / oder Vakuum gehalten ist.

16. Schalenverschließmaschine oder Tiefziehverpackungsmaschine (20) nach einem der Ansprüche 13 bis 15, **dadurch gekennzeichnet, dass** die Schalenverschließmaschine oder Tiefziehverpackungsmaschine (20) im Bereich der Siegelstation (S) ein höhenverstellbares Oberwerkzeug, welches vorzugsweise ein Domwerkzeug aufweist, und / oder das Unterwerkzeug (10) in der Siegelstation (S) der Schalenverschließmaschine oder Tiefziehverpackungsmaschine (20) höhenverstellbar angeordnet ist.

## Claims

1. Lower tool (10) for a sealing station (S) or a moulding station (T) of a tray sealing machine or a deep-drawing packaging machine (20), the lower tool (10) being designed to be arranged on or in a lower tool holder of the tray sealing machine or deep-drawing packaging machine (20), whereby the tray sealing machine or deep-drawing packaging machine (20) is enabled to produce packagings, preferably skin packagings, with a flat base plate, **characterised in that** the lower tool (10) has, on a surface opposed to the level surface (13) preferably serving as a support surface for a flat base plate of a skin packaging, a number of openings or material recesses (16), which are spaced apart from one another via ribs or webs (17) and the lower tool (10) has at least one passage (18) by means of which a vacuum or suction can be generated on a surface of the lower tool, preferably on a surface (13) serving as a support surface for a flat base plate of a skin packaging.

2. Lower tool (10) according to claim 1, **characterised in that** the lower tool (10) is designed to be arranged detachably or undetachably on or in the tray sealing machine or the deep-drawing packaging machine (20).

3. Lower tool (10) according to claim 1 or 2, **characterised in that** the lower tool (10) is formed integrally or in multiple parts.

4. Lower tool according to any one of the preceding claims, **characterised in that** the lower tool (10) is formed substantially cuboid, preferably with at least one level surface (13), which is preferably formed as a support surface for a flat base plate of a skin packaging.

5. Lower tool (10) according to any one of the preceding claims, **characterised in that** the lower tool (10) is manufactured at least partly from metal, preferably from aluminium or stainless steel, or from plastic.

6. Use of at least one lower tool (10) according to any one of the preceding claims, which tool is designed to be arranged on or in a lower tool holder of the tray sealing machine or deep-drawing packaging machine (20), whereby the tray sealing machine or deep-drawing packaging machine (20) is enabled to produce packagings, preferably skin packagings, with a flat base plate, for converting a tray sealing machine or a deep-drawing packaging machine (20), which is adapted to produce a first packaging type, to produce a second packaging type, in particular to produce a second packaging type with a flat base surface, particularly preferably to produce skin packagings with a flat base surface.

7. Use according to claim 6, **characterised in that** the lower tool (10) is arranged detachably or undetachably on or in the tray sealing machine or the deep-drawing packaging machine (20), preferably on or in a sealing station (S) and/or a moulding station (T) of the tray sealing machine or the deep-drawing packaging machine (20).

8. Use according to claim 6, **characterised in that** the lower tool (10) is arranged on or in the tray sealing machine or the deep-drawing packaging machine (20), preferably on or in the sealing station (S) and/or the moulding station (T) of the tray sealing machine or the deep-drawing packaging machine (20) in such a way that the lower tool (10) replaces, bridges or fills a tray holder or tray holder trough (M) of the sealing station (S) or a moulding trough (M) of the moulding station (T).

9. Use according to any one of claims 6 to 8, **characterised in that** on a surface of the lower tool (10), preferably on a surface (13) serving as a support surface for a flat base plate of a skin packaging, a suction or vacuum is generated.

10. Use according to any one of claims 6 to 9, **characterised in that** the lower tool (10) is arranged on or in the tray sealing machine or the deep-drawing packaging machine (20), preferably on or in the sealing station (S) and/or the moulding station (T) of the packaging machine, in such a way that the lower tool (10) is held chiefly by gravity in the sealing station (S) or the moulding station (T) of the tray sealing machine or the deep-drawing packaging machine (20).

11. Set of a plurality of different lower tools (10) respectively according to any one of claims 1 to 5 for converting a tray sealing machine or a deep-drawing packaging machine (10) for the production of a number of different packaging types.

12. Method for producing a packaging by means of a tray sealing machine or a deep-drawing packaging machine (20), preferably for producing a skin packaging, preferably with a flat base surface, with the step: arrangement of a lower tool (10) according to any one of claims 1 to 5, which is designed to be arranged on or in a lower tool holder of the tray sealing machine or deep-drawing packaging machine (20), whereby the tray sealing machine or deep-drawing packaging machine (20) is enabled to produce packagings, preferably skin packagings, with a flat base plate, in the tray sealing machine or deep-drawing packaging machine (20), preferably on or in a sealing station (S) or moulding station (T) of the tray sealing machine or deep-drawing packaging machine (20).

13. Tray sealing machine or deep-drawing packaging machine (20), **characterised in that** the tray sealing machine or deep-drawing packaging machine (20) has at least one lower tool (10) according to any one of claims 1 to 5, which is designed to be arranged on or in a lower tool holder of the tray sealing machine or deep-drawing packaging machine (20), whereby the tray sealing machine or deep-drawing packaging machine (20) is enabled to produce packagings, preferably skin packagings, with a flat base plate and can be used to produce a packaging type with a flat base surface, particularly preferably to produce skin packagings with a flat base surface.

14. Tray sealing machine or deep-drawing packaging machine (20) according to claim 13, **characterised in that** the at least one lower tool (10) is arranged detachably or undetachably on or in the tray sealing machine or deep-drawing packaging machine (20), preferably on or in a sealing station (S) and/or moulding station (T) of the tray sealing machine or deep-drawing packaging machine (20).

15. Tray sealing machine or deep-drawing packaging machine (20) according to claim 14, **characterised in that** the at least one lower tool (10) on or in the tray sealing machine or deep-drawing packaging machine (20), preferably on or in a sealing station (S) and/or moulding station (T) of the tray sealing machine or deep-drawing packaging machine (20), is held chiefly by gravity or by gravity and/or vacuum.

16. Tray sealing machine or deep-drawing packaging machine (20) according to any one of claims 13 to 15, **characterised in that** the tray sealing machine or deep-drawing packaging machine (20) has in the area of the sealing station (S) a height-adjustable upper tool, which preferably has a dome tool, and/or the lower tool (10) is arranged height-adjustably in the sealing station (S) of the tray sealing machine or deep-drawing packaging machine (20).

## Revendications

1. Outil inférieur (10) pour une station de scellage (S) ou une station de formage (T) d'une machine de fermeture de barquettes ou d'une machine d'emballage par thermoformage (20), l'outil inférieur (10) étant conçu pour être agencé sur ou dans un logement d'outil inférieur de la machine de fermeture de barquettes ou de la machine d'emballage par thermoformage (20), la machine de fermeture de barquettes ou la machine d'emballage par thermoformage (20) étant ainsi apte à la fabrication d'emballages, de préférence d'emballages moulants, avec une plaque de base plate, **caractérisé en ce que** l'outil inférieur (10) présente sur une surface opposée à la surface plane (13), servant de préférence de surface d'appui pour une plaque de base plate d'un emballage moulant, un nombre d'évidements ou de creux de matériau (16), qui sont espacés les uns des autres par des nervures ou des entretoises (17) et l'outil inférieur (10) présente au moins un passage (18), au moyen duquel un vide ou une aspiration peut être généré sur une surface de l'outil inférieur, de préférence sur une surface (13) servant de surface d'appui pour une plaque de base plate d'un emballage moulant.

2. Outil inférieur (10) selon la revendication 1, **caractérisé en ce que** l'outil inférieur (10) est conçu pour être agencé de manière amovible ou non amovible sur ou dans la machine de fermeture de barquettes ou la machine d'emballage par thermoformage (20).

3. Outil inférieur (10) selon la revendication 1 ou 2, **caractérisé en ce que** l'outil inférieur (10) est configuré à une seule pièce ou à plusieurs pièces.

4. Outil inférieur selon l'une quelconque des revendications précédentes, **caractérisé en ce que** l'outil inférieur (10) est configuré essentiellement sous forme parallélépipédique, de préférence avec au moins une surface plane (13), qui sert de préférence de surface d'appui pour une plaque de base plate d'un emballage moulant.

5. Outil inférieur (10) selon l'une quelconque des revendications précédentes, **caractérisé en ce que** l'outil inférieur (10) est fabriqué au moins partiellement en métal, de préférence en aluminium ou en acier inoxydable, ou en matière plastique.

6. Utilisation d'au moins un outil inférieur (10) selon l'une quelconque des revendications précédentes, qui est conçu pour être agencé sur ou dans un logement d'outil inférieur de la machine de fermeture de barquettes ou de la machine d'emballage par thermoformage (20), la machine de fermeture de barquettes ou à la machine d'emballage par thermoformage (20) étant ainsi apte à la fabrication d'emballages, de préférence d'emballages moulants, avec une plaque de base plate, pour la conversion d'une machine de fermeture de barquettes ou d'une machine d'emballage par thermoformage (20), qui est adaptée pour la fabrication d'un premier type d'emballage, pour la fabrication d'un deuxième type d'emballage, notamment pour la fabrication d'un deuxième type d'emballage avec une surface de base plate, de manière particulièrement préférée pour la fabrication d'emballages moulants avec une surface de base plate.

7. Utilisation selon la revendication 6, **caractérisée en ce que** l'outil inférieur (10) est agencé de manière amovible ou non amovible sur ou dans la machine de fermeture de barquettes ou la machine d'emballage par thermoformage (20), de préférence sur ou dans une station de scellage (S) et/ou une station de formage (T) de la machine de fermeture de barquettes ou de la machine d'emballage par thermoformage (20).

8. Utilisation selon la revendication 6, **caractérisée en ce que** l'outil inférieur (10) est agencé sur ou dans la machine de fermeture de barquettes ou la machine d'emballage par thermoformage (20), de préférence sur ou dans la station de scellage (S) et/ou la station de formage (T) de la machine de fermeture de barquettes ou de la machine d'emballage par thermoformage (20) de telle sorte l'outil inférieur (10) remplace, recouvre ou remplit un logement de barquette ou une cavité de réception de barquette (M) de la station de scellage (S) ou une cavité de formage (M) de la station de formage (T).

9. Utilisation selon l'une quelconque des revendications 6 à 8, **caractérisée en ce qu'**une aspiration ou un vide est généré sur une surface de l'outil inférieur (10), de préférence sur une surface (13) servant de surface d'appui pour une plaque de base plate d'un emballage moulant.

10. Utilisation selon l'une quelconque des revendications 6 à 9, **caractérisée en ce que** l'outil inférieur (10) est agencé sur ou dans la machine de fermeture de barquettes ou la machine d'emballage par thermoformage (20), de préférence sur ou dans la station de scellage (S) et/ou la station de formage (T) de la machine d'emballage, de telle sorte que l'outil inférieur (10) est principalement maintenu par la force de pesanteur dans la station de scellage (S) ou la station de formage (T) de la machine de fermeture de barquettes ou de la machine d'emballage par thermoformage (20).

11. Ensemble composé d'une pluralité d'outils inférieurs (10) différents, chacun selon l'une quelconque des revendications 1 à 5, pour la conversion d'une machine de fermeture de barquettes ou d'une machine d'emballage par thermoformage (10), pour la fabrication de plusieurs types d'emballages différents.

12. Procédé de fabrication d'un emballage au moyen d'une machine de fermeture de barquettes ou d'une machine d'emballage par thermoformage (20), de préférence pour la fabrication d'un emballage moulant, de préférence avec une surface de base plate, comprenant l'étape suivante : l'agencement d'un outil inférieur (10) selon l'une quelconque des revendications 1 à 5, qui est conçu pour être agencé sur ou dans un logement d'outil inférieur de la machine de fermeture de barquettes ou de la machine d'emballage par thermoformage (20), la machine de fermeture de barquettes ou à la machine d'emballage par thermoformage (20) étant ainsi apte à la fabrication d'emballages, de préférence d'emballages moulant, avec une plaque de base plate, dans la machine de fermeture de barquettes ou la machine d'emballage par thermoformage (20), de préférence sur ou dans une station de scellage (S) ou une station de formage (T) de la machine de fermeture de barquettes ou de la machine d'emballage par thermoformage (20).

13. Machine de fermeture de barquettes ou machine d'emballage par thermoformage (20), **caractérisée en ce que** la machine de fermeture de barquettes ou la machine d'emballage par thermoformage (20) présente au moins un outil inférieur (10) selon l'une quelconque des revendications 1 à 5, qui est conçu pour être agencé sur ou dans un logement d'outil inférieur de la machine de fermeture de barquettes ou de la machine d'emballage par thermoformage (20), la machine de fermeture de barquettes ou la machine d'emballage par thermoformage (20) étant ainsi apte à la fabrication d'emballages, de préférence d'emballages moulants, avec une plaque de base plate, et peut être utilisée pour la fabrication d'un type d'emballage avec une surface de base plate, de préférence pour la fabrication d'emballages moulants avec une surface de base plate.

14. Machine de fermeture de barquettes ou machine d'emballage par thermoformage (20) selon la revendication 13, **caractérisée en ce que** l'au moins un outil inférieur (10) est agencé de manière amovible ou non amovible sur ou dans la machine de fermeture de barquettes ou la machine d'emballage par thermoformage (20), de préférence sur ou dans une station de scellage (S) et/ou une station de formage (T) de la machine de fermeture de barquettes ou de la machine d'emballage par thermoformage (20).

15. Machine de fermeture de barquettes ou machine d'emballage par thermoformage (20) selon la revendication 14, **caractérisée en ce que** l'au moins un outil inférieur (10) est maintenu sur ou dans la machine de fermeture de barquettes ou machine d'emballage par thermoformage (20), de préférence sur ou dans une station de scellage (S) et/ou une station de formage (T) de la machine de fermeture de barquettes ou de la machine d'emballage par thermoformage (20), principalement par la force de pesanteur ou par la force de pesanteur et/ou par un vide.

16. Machine de fermeture de barquettes ou machine d'emballage par thermoformage (20) selon l'une quelconque des revendications 13 à 15, **caractérisée en ce que** la machine de fermeture de barquettes ou la machine d'emballage par thermoformage (20) présente dans la zone de la station de scellage (S) un outil supérieur réglable en hauteur, qui présente de préférence un outil en dôme, et/ou l'outil inférieur (10) est agencé de manière réglable en hauteur dans la station de scellage (S) de la machine de fermeture de barquettes ou de la machine d'emballage par thermoformage (20).
